# EUROPEAN PATENT SPECIFICATION

(11) **EP 1 896 753 B1**
(45) Date of publication and mention of the grant of the patent: **18.08.2010**
(21) Application number: 06754310.8
(22) Date of filing: 12.06.2006
(51) Int. Cl.: F16J 15/12, F02F 11/00

(54) **GASKET WITH SEALING INSERT**
DICHTUNG MIT DICHTUNGSEINLAGE
JOINT A INSERT D'ETANCHEITE

(30) Priority: 29.06.2005 DE 102005030387
(43) Date of publication of application: 12.03.2008
(73) Proprietor: REINZ-Dichtungs-GmbH, 89233 Neu-Ulm (DE)
(72) Inventor: WIDMANN, Erwin, 89165 Dietenheim (DE)
(74) Representative: Pfenning, Meinig & Partner GbR
(86) International application number: PCT/EP2006/005627
(87) International publication number: WO 2007/000239

(56) References cited:
- EP-A- 1 207 323
- DE-A1- 3 903 918
- DE-A1- 4 010 991
- GB-A- 2 092 244
- US-A- 5 671 927
- US-A- 5 803 465

## Description

The invention relates to a gasket for sealing two components in a combustion engine, said gasket comprising at least one layer and having at least one through opening for fluid to pass through. The gasket according to the invention is so designed that, at least in the one metal layer at the at least one through opening, the at least one layer forms a projection, the projection having an attachment area, at which there is an adhesive bond between the at least one layer and a flat reinforcing element of a reinforced sealing insert. What is essential here is that sealing profiles are applied to the flat reinforcing element outside the attachment area, the reinforced sealing insert being so positioned via a cranking of the projection and/or a cranking of the flat reinforcement element, that the sealing insert has with its sealing profiles a substantially identical operating height in the region of the sealing zone between the two components to be sealed.

Known in the prior art so far have been solutions in which cylinder head gaskets are also provided with a sealing insert at the fluid passage openings.

Thus from DE 40 10 991 A1 can be taken.a single-layer metal cylinder head gasket which has a sealing ring inserted in at least one of the through openings, said sealing ring comprising reinforced soft metal material, and radially protruding projections on the outer circumference.

Furthermore, in DE 102 35 742 B4 is disclosed a metal cylinder head gasket in which an insert is arranged in the fluid passage openings, a sealing profile comprising elastomeric material being provided at the edge of the insert.

What is disadvantageous about the solution from DE 40 10 991 A1 is in particular that attaching the reinforcing ring to the sealing plate has to be realised by an expensive caulking process. The manufacture of such a cylinder head gasket is therefore expensive and cost-intensive. Moreover, attaching the ring by means of a caulking process does not always guarantee long-term durability.. Besides, it has also become apparent that an optimal sealing effect can still not be produced in this way.

What is disadvantageous about the solution described in DE 102 35 742 B4 is that the insert provided there is only attached by injection moulding, such that under a high load the sealing effect is problematic. This solution also means that large seals can only be produced with very high effort since large tools are necessary. Furthermore there is the disadvantage that exchanging an insert after the injection moulding process is no longer possible and thus there is hardly any possibility of repair.

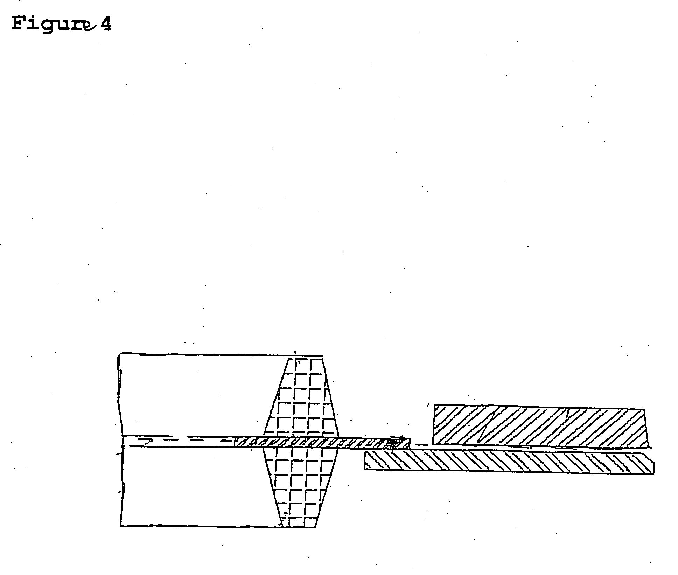

Using metal cylinder head gaskets of the above-described design with an insert according to Fig. 4 is also known. In this embodiment, the insert is attached to a projection by means of an adhesive bond. However what is disadvantageous here is that in this embodiment, there must be exact matching of the structural heights of the two metal layers and the height of the insert in order to achieve optimum positioning.

Proceeding therefrom, the object of the present invention is to quote an at least single-layer metal gasket which is simple and cost-effective in its manufacturing process and in which the sealing insert is securely connected to the basic support. The metal gasket according to the invention should also have an excellent sealing effect in the area of the fluid passage openings even under a high and permanent load.

This object is accomplished by the features of patent claim 1. The subordinate claims list advantageous developments.

The essential element of the solution according to the invention is thus that the sealing insert, which comprises a flat reinforcing element and sealing profiles attached to both sides of same, is so positioned via a cranking of the flat reinforced sealing insert and/or via a cranking of the projection that the sealing insert with its sealing profiles has a substantially identical operating height in the region of the sealing zone between the two components to be sealed. Due to the design of the cranking, it is thus very simply possible to achieve exact adjustment and positioning of the sealing insert by setting a specific cranking angle either for the flat reinforcing element and/or for the projection itself. In combination with the sealing profiles which are arranged on both sides of the flat sealing insert, an optimal seal is thus possible even under high stress at the through openings and even with a permanent load. What must also be emphasised is that in the gasket according to the invention, as a result of the inventive cranking either of the projection and/or of the flat reinforcing element, simple production of such a sealing insert is possible and thus also cost-effective manufacture of the entire gasket with good functional properties is made possible.

In principle, the gasket according to the invention can comprise a single metal layer or also consist of a structure comprising at least two layers, in which case at least one of the layers has to be a metal layer.

In the embodiment of the gasket according to the invention in the form of a single-layer gasket, it is preferred for the projection itself to have been formed by a reduction in the thickness of the one gasket layer. The thickness reduction of the one layer can take place according to methods known per se from the prior art, especially embossing, milling, etching. It is preferred in this embodiment for the cranking to be formed in the flat reinforcing element of the reinforced sealing element. The angle of the cranking can be set at random but must be so selected that the sealing profiles of the sealing insert make possible a substantially identical operating height in the area of the sealing zone between the two components to be sealed.

In the embodiment of the gasket according to the invention which has at least two layers, these at least two layers are so formed that, at the at least one through opening, the first metal layer has, relative to the second layer and at least in sections, a projection pointing in the direction of the through opening. This projection now forms the attachment area for an adhesive bond between the first metal layer and a flat reinforcing element.

Due to the formation of the projection in the first layer, which forms an attachment area for the adhesive bond with the reinforcing element, a permanent connection is now possible which is also stable under high stress. Because the projection is formed by the first layer itself, at least in sections, simple and cost-effective manufacture is also possible by corresponding shaping of the layer. A further crucial advantage of the solution according to the invention can be seen in the fact that, due to the formed attachment area, a permanent adhesive bond can be produced between the sealing insert and the layer. The sealing insert has, as in the single-layer variant of the gasket, preferably a symmetrical arrangement relative to the sealing layers.

To produce the adhesive bond between the layer forming the projection and the sealing insert, the flat reinforcing element of the sealing insert is bent either, the cranking being so designed that the sealing insert is mounted flexibly and correctly positioned to adapt to the components to be sealed. Another possible way of producing the adhesive bond according to the invention consists in bending the projection itself of the first metal layer.

The projection of the first metal layer can here be formed either extending completely around the through opening, or the projection is only partially present, i.e. does not extend completely around the through opening. It can be sufficient for two to five projections to be provided. A corresponding design is also possible in the case of the single-layer variant.

According to the invention, the sealing insert itself is formed from a flat reinforcing element and an elastomeric sealing profile. The reinforcing element comprises here in the simplest case a metal, preferably a stainless steel or a carbon steel.

According to the invention, sealing profiles are applied at least in regions to the flat reinforcing element. The sealing profile can here be vulcanised onto the flat reinforcing element. The economic elastomer injection moulding method can here be used which is realised for example using transfer or injection moulding machines. Both edge-moulding and on-top-moulding methods are also possible.

Depending on the application, the sealing profiles can here be formed either asymmetrical or symmetrical. Asymmetrical sealing profiles can be used for example preferably to even out grooves in adjoining components. Preferred forms of the sealing profiles are sealing lips, sealing tracks or beads. As elastomeric materials can be considered here all the materials selected from the group: silicon, FPM (fluoropolymer), HNBR (hydrated nitrile-butadiene rubber), NBR (nitrile- butadiene rubber), EPDM (ethylene-propylene rubber), ACM (acrylate rubber), AEM (ethylene acrylate rubber) and TPE (thermoplastic elastomers). According to requirements, different materials for the sealing profiles can be used at different fluid passage openings within a single gasket.

As already explained in detail initially, a great advantage of the solution according to the invention can be seen in the fact that, due to the attachment area of the at least one layer, formed via the projection, an adhesive bond with the flat reinforcing element of the sealing insert is possible. By means of welding, especially ultrasound-, laser-, spot- or projection-welding and/or soldering, an adhesive bond of the sealing insert with the projection can be produced which is durable even under high stress. These solutions are preferred to a gluing solution which can in principle also be used in the.gasket according to the invention. In all these connecting techniques there is basically the possibility of removing individual sealing inserts, without greatly damaging the gasket, and then replacing them by a different sealing insert.

The gasket according to the invention is preferably a cylinder head gasket for sealing the cylinder head from the cylinder block. In the case of a cylinder head gasket, it naturally can have additional through openings and at least one combustion chamber. It is also possible that the gasket besides the inserts according to the invention contains at least one insert without an opening. This allows using identical gasket layers for engines with different patterns of fluid passages.

It has become apparent that the gasket according to the invention is suitable especially for sealing fluid passages in combustion engines, especially in commercial vehicles, but is also suitable for stationary applications.

The invention is explained in greater detail below with the aid of four figures.
Fig. 1 shows the area of a fluid passage opening of a cylinder head gasket comprising two layers, in plan view.
Figs. 2a and 2b show the sections designated A-A and B-B in Fig. 1.
Fig. 3 shows in section the structure of a metal cylinder head gasket according to the invention comprising a single layer.
Fig. 4 shows the structure of a metal cylinder head gasket for the area of the fluid passage opening, according to the prior art.

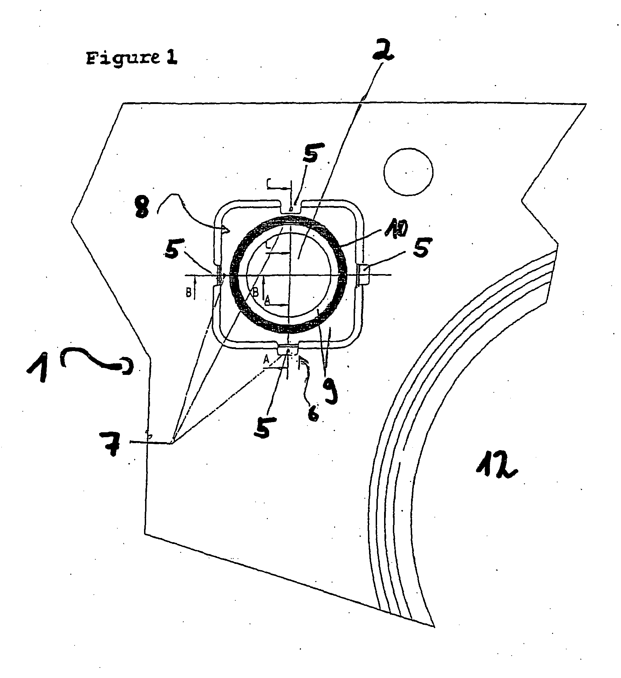

Fig. 1 now shows a section of a multi-layer metal cylinder head gasket 1 which relates to the part of a cylinder head gasket which has the fluid passage opening 2. In the metal cylinder head gasket 1 according to the embodiment of Fig. 1, a combustion chamber through opening is designated as 12. Naturally the cylinder head gasket can have a plurality of combustion chamber through openings 12 and a plurality of fluid passage openings 2 which even may differ in their dimensions. In Fig. 1 the insert is designated as 8. As Fig. 1 shows, the embodiment depicted there only has three types of projections 5 representing three different embodiments - which then form the attachment area 6 for the adhesive bond with the sealing.insert 8. The reinforcing element 9 is here provided in a symmetrical embodiment with a sealing profile 10 extending on both sides.

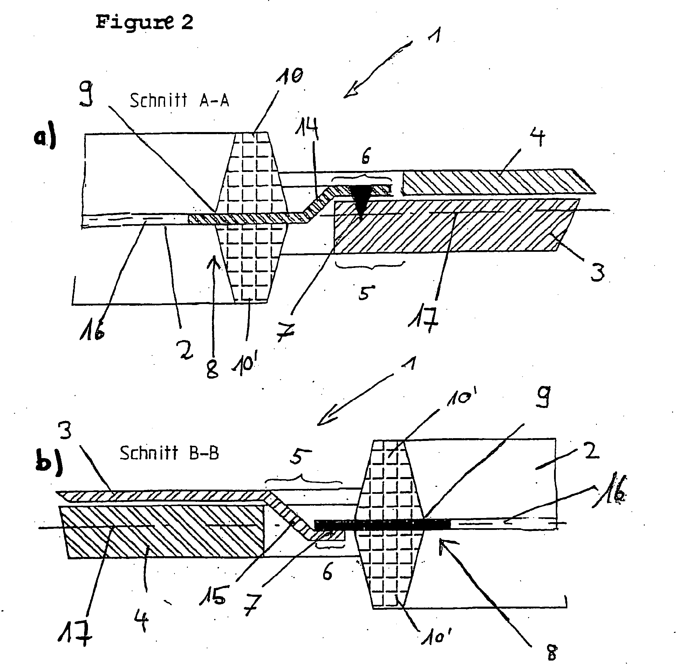

Fig. 2 shows two different variants in respect of the design of the sealing insert and of the projections.

Fig. 2a reproduces section A-A of Fig. 1. The sealing insert 8 here has a reinforcing element 9 which is provided with a cranking. As Fig. 2a shows, the imaginary centre line 16 of the sealing insert 8 merges into.the imaginary centre line 17 of the gasket. This guarantees a symmetrical arrangement of the sealing insert 8 relative to the gasket layers 3, 4. The sealing profile 10 is applied symmetrically on both sides to the flat reinforcing element 9. In the fitted state, these end faces, designated as 10', of the sealing profiles 10 then form the contact point with the component to be sealed. In the present case, due to the symmetrical formation of the sealing profile 10 and the cranking 14, an orientation of the sealing insert is achieved which makes possible an identical operating height. The bent reinforcing element 9 is, as can be seen from Fig. 2a, only connected by means of a welding process to the projection 5 of layer 3 of the cylinder head gasket. Layer 3 in the embodiment according to Fig. 2a and the reinforcing element 9 are here formed from the same material or the same type of material, such that a welding process can be performed.

Fig. 2b shows now the section B-B of Fig. 1, the sealing insert 8 not being bent in this case, but the layer 3 being formed with a cranking 15. The reference numerals 16, 17 designate, in the same way as in Fig. 1a, the imaginary centre lines of the sealing insert 8 and of the gasket with layers 3, 4. The sealing insert 8 thus again has a symmetrical arrangement with respect to layers 3, 4. The cranking 15 now again produces a projection 5 and a corresponding attachment area 6, such that a weld 7 is possible.

In the embodiment according to Figs. 1 and 2, layer 3 and the reinforcing element 9 are formed from metal, such that the welding 7 can be carried out by means of known welding methods. Layer 4 also consists of metal in the example shown, and the sealing profile consists of FPM.

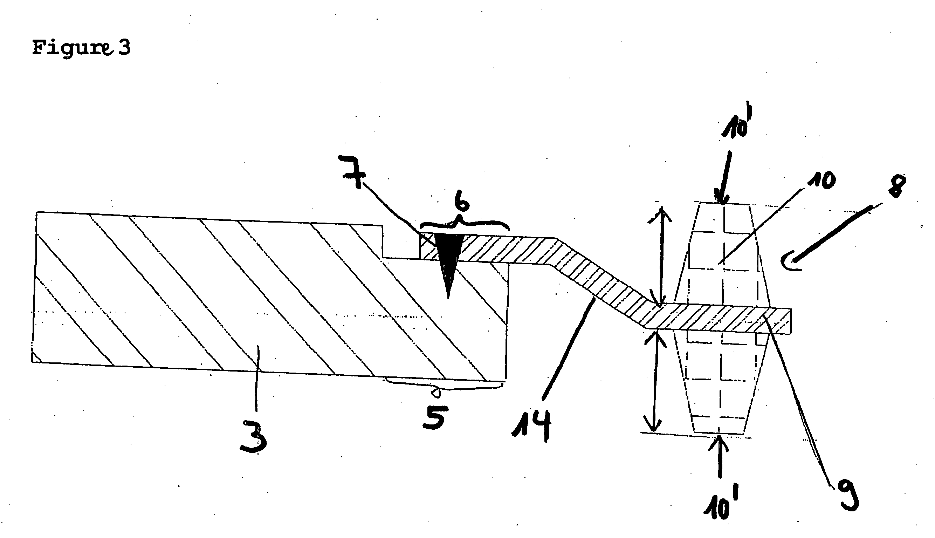

Fig. 3 shows now an embodiment of the invention in which the metal cylinder head gasket is constructed from a single layer 3. Layer 3 here forms a projection 5 which has been introduced into the metal layer by metal working methods, such as embossing, milling, etching. In the example according to Fig. 3, the flat reinforcing element 9 of the sealing insert 8 has a cranking 14. The free limb of the cranking 14 is connected by welding 7 to the projection 5. The attachment area is here designated as 6.

In the example according to Fig. 3, the sealing insert 8 is again so positioned that a substantially identical operating height is achieved between the components to be sealed. This is represented by the arrows. For achieving an approximately identical operating height, it is not necessary for each of the sealing profiles 10 to be formed symmetrical and at the same height, but it is naturally also possible to use sealing profiles of differing height if then an appropriate compensation is provided by the cranking 14, such that again a substantially identical operating height is achieved. The definition "substantially identical operating height" refers in the present invention solely to the area of the components to be sealed which are in contact with the sealing profiles 10.

Finally, Fig. 4 shows an embodiment of the prior art in which the sealing insert with symmetrical sealing profiles is also attached to a double-layer metal cylinder head gasket via a projection.

## Claims

1. Flat gasket (1) for sealing two components in a combustion engine, said gasket comprising at least one metal layer (3) which has at least one through opening for fluid to pass through (2), at the at least one through opening of the at least one layer (3), a projection (5) being present which points in the direction of the through opening and forms an attachment area (6) and on which a reinforced sealing insert (8) is arranged, **characterized in that** said arrangement is by means of an adhesive bond to a flat reinforcing element (9), and **in that** sealing profiles (10) are applied on both sides of the flat reinforcing element (9) outside the attachment area (6), and the reinforced sealing insert (8) being so positioned via a cranking (15) of the projection (5) and/or a cranking (14) of the flat reinforcing element (9) that the sealing insert (8) has with its sealing profiles (10) a substantially identical operating height in the region of the sealing points between the two components to be sealed.

2. Flat gasket according to claim 1, **characterised in that** the sealing insert (8) is arranged symmetrically inside the gasket constructed from at least one layer (3).

3. Flat gasket according to claim 1 or 2, **characterised in that** the gasket is a single-layer gasket and the projection (5) is formed by a reduction of the thickness of the one layer (3) and the flat reinforcing element (9) of the reinforced sealing insert (8) has a cranking (14).

4. Flat gasket according to claim 1 or 2, **characterised in that** the gasket has at least two layers, the at least one metal layer (3) forming a projection (5) as an attachment area (6) in the direction of the through opening by being cranked relative to a second layer (4).

5. Flat gasket according to claim 1, 2 or 4, **characterised in that** the projection (5) of the first metal layer (3) has a cranking (15), the free limb of the cranking forming the attachment area (6).

6. Flat gasket according to claim 1, 2 or 4, **characterised in that** the flat reinforcing element (9) has a cranking (15), and the free limb of the cranking forms the attachment area (6).

7. Flat gasket according to at least one of claims 1 to 6, **characterised in that** the one or first metal layer (3) consists of a stainless steel or a carbon steel.

8. Flat gasket according to at least one of claims 1, 2 and 4 to 7, **characterised in that** the second layer (4) consists of a stainless steel or a carbon steel.

9. Flat gasket according to at least one of claims 1 to 8, **characterised in that** the projection (5) is formed only partially, not extending completely'around the through opening.

10. Flat gasket according to at least one of claims 1 to 8, **characterised in that** the projection (5) is formed to extend completely around the through opening.

11. Flat gasket according to at least one of claims 1 to 10, **characterised in that** the reinforced sealing insert (8) has elastomeric sealing profiles (10).

12. Flat gasket according to claim 11, **characterised in that** the flat reinforcing element (9) consists of a metal.

13. Flat gasket according to claim 12, **characterised in that** the reinforcing element (9) consists of a stainless steel or a carbon steel.

14. Flat gasket according to at least one of claims 1 to 13, **characterised in that** the shape of the flat reinforcing element (9) is matched to the shape of the through opening.

15. Flat gasket according to at least one of claims 1 to 14, **characterised in that** the sealing profiles (10) are vulcanised onto the reinforcing element (9).

16. Flat gasket according to at least one of claims 1 to 15, **characterised in that** the sealing profiles (10) of the sealing inserts (8) are moulded on by edge-moulding methods or on-top-moulding methods.

17. Flat gasket according to at least one of claims 1 to 16, **characterised in that** the sealing profiles (10) are applied asymmetrically to the flat reinforcing element.

18. Flat gasket according to at least one of claims 1 to 16, **characterised in that** the sealing profiles (10) are applied symmetrically to the flat reinforcing element.

19. Flat gasket according to at least one of claims 1 to 18, **characterised in that** the sealing profiles (10) are formed in the shape of sealing lips, sealing tracks or beads.

20. Flat gasket according to at least one of claims 1 to 19, **characterised in that** the elastomeric material is selected from the group: silicon, FPM, HNBR, NBR, EPDM, ACM, AEM and TPE.

21. Flat gasket according to at least one of claims 1 to 20, **characterised in that** the adhesive bond (7) is produced by gluing and/or welding, especially ultrasound-, laser-, spot- or projection-welding, and/or by soldering.

22. Flat gasket according to at least one of claims 1 to 21, **characterised in that** the gasket is a cylinder head gasket for sealing the cylinder head from the cylinder block and has additional through openings at least for the at least one combustion chamber.

23. Use of the gasket according to at least one of claims 1 to 22 for sealing fluid passages in combustion engines.

24. Use according to claim 23 for combustion engines in commercial vehicles.

25. Use according to one of claims 23 or 24, for sealing a cylinder head from a cylinder block.

## Patentansprüche

1. Flachdichtung (1) zur Abdichtung von zwei Bauteilen in einer Verbrennungskraftmaschine, wobei die Dichtung mindestens eine metallische Lage (3) enthält, welche mindestens eine Durchgangsöffnung für einen Flüssigkeitsdurchtritt (2) aufweist, wobei an der mindestens einen Durchgangsöffnung der mindestens einen Lage (3) ein Vorsprung (5) angeordnet ist, welcher in Richtung der Durchgangsöffnung weist und einen Befestigungsbereich (6) bildet und an welchem ein verstärktes Einsatzdichtelement (8) angeordnet ist,
**dadurch gekennzeichnet, dass**
seine Anordnung über eine kraftschlüssige Verbindung zu einem flächigen Verstärkungselement (9) erfolgt und dass
auf beiden Seiten des flächigen Verstärkungselementes (9) außerhalb des Befestigungsbereichs (6) Dichtprofile (10) aufgebracht sind und
das verstärkte Einsatzdichtelement (8) so über eine Kröpfung (15) des Vorsprungs (5) und/oder eine Kröpfung (14) des flächigen Verstärkungselements (9) angeordnet ist, dass das Einsatzdichtelement (8) mit seinen Dichtprofilen (10) im Bereich der Abdichtstellen zwischen den zwei abzudichtenden Bauteilen eine im Wesentlichen gleiche Arbeitshöhe aufweist.

2. Flachdichtung nach Anspruch 1,
**dadurch gekennzeichnet, dass** das Einsatzdichtelement (8) symmetrisch innerhalb der aus der mindestens einen Lage (3) aufgebauten Dichtung angeordnet ist.

3. Flachdichtung nach Anspruch 1 oder 2,
**dadurch gekennzeichnet, dass** die Dichtung eine Einlagendichtung ist und der Vorsprung (5) durch eine Reduzierung der Dicke der einen Lage (3) gebildet ist und das flächige Verstärkungselement (9) des verstärkten Einsatzdichtelementes (8) eine Kröpfung (14) aufweist.

4. Flachdichtung nach Anspruch 1 oder 2,
**dadurch gekennzeichnet, dass** die Dichtung mindestens zwei Lagen aufweist, wobei die mindestens eine metallische Lage (3) in Richtung der Durchgangsöffnung durch Versatz gegenüber einer zweiten Lage (4) einen Vorsprung (5) als Befestigungsbereich (6) bildet.

5. Flachdichtung nach Anspruch 1, 2 oder 4,
**dadurch gekennzeichnet, dass** der Vorsprung (5) der ersten metallischen Lage (3) eine Kröpfung (15) aufweist, wobei der freie Schenkel der Kröpfung den Befestigungsbereich (6) bildet.

6. Flachdichtung nach Anspruch 1, 2 oder 4,
**dadurch gekennzeichnet, dass** das flächige Verstärkungselement (9) eine Kröpfung (15) aufweist und der freie Schenkel der Kröpfung den Befestigungsbereich (6) bildet.

7. Flachdichtung nach mindestens einem der Ansprüche 1 bis 6,
**dadurch gekennzeichnet, dass** die eine oder die erste Lage (3) aus einem Edelstahl oder einem Kohlenstoffstahl besteht.

8. Flachdichtung nach mindestens einem der Ansprüche 1, 2 und 4 bis 7,
**dadurch gekennzeichnet, dass** die zweite Lage (4) aus einem Edelstahl oder einem Kohlenstoffstahl besteht.

9. Flachdichtung nach mindestens einem der Ansprüche 1 bis 8,
**dadurch gekennzeichnet, dass** der Vorsprung (5) derart ausgebildet ist, dass er die Durchgangsöffnung nur partiell, nicht vollständig, umläuft.

10. Flachdichtung nach mindestens einem der Ansprüche 1 bis 8,
**dadurch gekennzeichnet, dass** der Vorsprung (5) derart ausgebildet ist, dass er die Durchgangsöffnung vollständig umläuft.

11. Flachdichtung nach mindestens einem der Ansprüche 1 bis 10,
**dadurch gekennzeichnet, dass** das verstärkte Einsatzdichtelement (8) elastomere Dichtprofile (10) aufweist.

12. Flachdichtung nach Anspruch 11,
**dadurch gekennzeichnet, dass** das flächige Verstärkungselement (9) aus einem Metall besteht.

13. Flachdichtung nach Anspruch 12,
**dadurch gekennzeichnet, dass** das Verstärkungselement (9) aus einem Edelstahl oder einem Kohlenstoffstahl besteht.

14. Flachdichtung nach mindestens einem der Ansprüche 1 bis 13,
**dadurch gekennzeichnet, dass** die Form des flächigen Verstärkungselements (9) an die Form der Durchgangsöffnung angepasst ist.

15. Flachdichtung nach mindestens einem der Ansprüche 1 bis 14,
**dadurch gekennzeichnet, dass** die Dichtprofile (10) auf das Verstärkungselement (9) aufvulkanisiert sind.

16. Flachdichtung nach mindestens einem der Ansprüche 1 bis 15,
**dadurch gekennzeichnet, dass** die Dichtprofile (10) der Einsatzdichtelemente (8) durch Edge-Molding-Verfahren oder On-Top-Molding-Verfahren angeformt sind.

17. Flachdichtung nach mindestens einem der Ansprüche 1 bis 16,
**dadurch gekennzeichnet, dass** die Dichtprofile (10) asymmetrisch auf dem flächigen Verstärkungselement aufgebracht sind.

18. Flachdichtung nach mindestens einem der Ansprüche 1 bis 16,
**dadurch gekennzeichnet, dass** die Dichtprofile (10) symmetrisch auf dem flächigen Verstärkungselement aufgebracht sind.

19. Flachdichtung nach mindestens einem der Ansprüche 1 bis 18,
**dadurch gekennzeichnet, dass** die Dichtprofile (10) in Form von Dichtlippen, -raupen oder Wülsten ausgebildet sind.

20. Flachdichtung nach mindestens einem der Ansprüche 1 bis 19,
**dadurch gekennzeichnet, dass** das elastomere Material ausgewählt ist aus der Gruppe Silikon, FPM, HNBR, NBR, EPDM, ACM, AEM und TPE.

21. Flachdichtung nach mindestens einem der Ansprüche 1 bis 20,
**dadurch gekennzeichnet, dass** die kraftschlüssige Verbindung (7) durch Kleben und/oder Schweißen, insbesondere Ultraschall-, Laser-, Punkt- oder Buckelschweißen, und/oder Löten erzeugt wird.

22. Flachdichtung nach mindestens einem der Ansprüche 1 bis 21,
**dadurch gekennzeichnet, dass** die Dichtung eine Zylinderkopfdichtung zur Abdichtung des Zylinderkopfs gegenüber dem Zylinderblock ist und noch weitere Durchgangsöffnungen zumindest für den mindestens einen Brennraum aufweist.

23. Verwendung der Dichtung nach mindestens einem der Ansprüche 1 bis 22 zur Abdichtung von Flüssigkeitsdurchtritten in Verbrennungskraftmaschinen.

24. Verwendung nach Anspruch 23 für Verbrennungskraftmaschinen in Nutzfahrzeugen.

25. Verwendung nach einem der Ansprüche 23 oder 24 zur Abdichtung eines Zylinderkopfes gegenüber einem Zylinderblock.

## Revendications

1. Joint plat (1) pour assurer l'étanchéité de deux composants dans un moteur à combustion, ledit joint comprenant au moins une couche métallique (3) qui possède au moins une ouverture traversante pour qu'un fluide passe à travers (2), à l'au moins une ouverture traversante de l'au moins une couche (3), une saillie (5) étant présente qui pointe dans la direction de l'ouverture traversante et forme une région de fixation (6) et sur laquelle un insert d'étanchéité renforcée (8) est agencé, **caractérisé en ce que** ledit agencement est réalisé au moyen d'un liaison adhésive à un élément de renfort plat (9), et **en ce que** les profils d'étanchéité (10) sont appliqués des deux côtés de l'élément de renfort plat (9) à l'extérieur de la région de fixation (6), et l'insert d'étanchéité renforcée (8) étant positionné ainsi par le biais d'un coude (15) de la saillie (5) et/ou un coude (14) de l'élément de renfort plat (9) de sorte que l'insert d'étanchéité (8) possède avec ses profils d'étanchéité (10) une hauteur d'utilisation sensiblement identique dans la région des points d'étanchéité entre les deux composants dont l'étanchéité doit être assurée.

2. Joint plat selon la revendication 1, **caractérisé en ce que** l'insert d'étanchéité (8) est agencé de manière symétrique à l'intérieur du joint construit à partir d'au moins une couche (3).

3. Joint plat selon la revendication 1 ou 2, **caractérisé en ce que** le joint est un joint à une seule couche et la saillie (5) est formée par une réduction de l'épaisseur de la couche unique (3) et l'élément de renfort plat (9) de l'insert d'étanchéité renforcée (8) présente un coude (14).

4. Joint plat selon la revendication 1 ou 2, **caractérisé en ce que** le joint possède au moins deux couches, l'au moins une couche métallique (3) formant une saillie (5) en tant que région de fixation (6) dans la direction de l'ouverture traversante en étant coudée par rapport à une deuxième couche (4).

5. Joint plat selon la revendication 1, 2 ou 4, **caractérisé en ce que** la saillie (5) de la première couche métallique (3) possède un coude (15), la branche libre du coude formant la région de fixation (6).

6. Joint plat selon la revendication 1, 2 ou 4, **caractérisé en ce que** l'élément de renfort plat (9) possède un coude (15), la branche libre du coude forme la région de fixation (6).

7. Joint plat selon au moins une des revendications 1 à 6, **caractérisé en ce que** l'une ou la première couche métallique (3) est constituée d'un acier inoxydable ou d'un acier au carbone.

8. Joint plat selon au moins une des revendications 1, 2 et 4 à 7, **caractérisé en ce que** la deuxième couche (4) est constituée d'un acier inoxydable ou d'un acier au carbone.

9. Joint plat selon au moins une des revendications 1 à 8, **caractérisé en ce que** la saillie (5) n'est formée que partiellement, en ne s'étend pas complètement autour de l'ouverture traversante.

10. Joint plat selon au moins une des revendications 1 à 8, **caractérisé en ce que** la saillie (5) est formée de manière à s'étendre complètement autour de l'ouverture traversante.

11. Joint plat selon au moins une des revendications 1 à 10, **caractérisé en ce que** l'insert d'étanchéité renforcée (8) possède des profils d'étanchéité élastomères (10).

12. Joint plat selon la revendication 11, **caractérisé en ce que** l'élément de renfort plat (9) est constitué d'un métal.

13. Joint plat selon la revendication 12, **caractérisé en ce que** l'élément de renfort (9) est constitué d'un acier inoxydable ou d'un acier au carbone.

14. Joint plat selon au moins une des revendications 1 à 13, **caractérisé en ce que** la forme de l'élément de renfort plat (9) correspond à la forme de l'ouverture traversante.

15. Joint plat selon au moins une des revendications 1 à 14, **caractérisé en ce que** les profils d'étanchéité (10) sont vulcanisés sur l'élément de renfort (9).

16. Joint plat selon au moins une des revendications 1 à 15, **caractérisé en ce que** les profils d'étanchéité (10) des inserts d'étanchéité (8) sont moulés par des procédés de moulage par les bords ou par des procédés de moulage par le dessus.

17. Joint plat selon au moins une des revendications 1 à 16, **caractérisé en ce que** les profils d'étanchéité (10) sont appliqués de manière asymétrique à l'élément de renfort plat.

18. Joint plat selon au moins une des revendications 1 à 16, **caractérisé en ce que** les profils d'étanchéité (10) sont appliqués de manière symétrique à l'élément de renfort plat.

19. Joint plat selon au moins une des revendications 1 à 18, **caractérisé en ce que** les profils d'étanchéité (10) sont formés sous la forme de lèvres d'étanchéité, de gorges d'étanchéité ou de joncs d'étanchéité.

20. Joint plat selon au moins une des revendications 1 à 19, **caractérisé en ce que** le matériau élastomère est choisi parmi le groupe : silicium, FPM, HNBR, NBR, EPDM, ACM, AEM et TPE.

21. Joint plat selon au moins une des revendications 1 à 20, **caractérisé en ce que** la liaison adhésive (7) est produite par collage et/ou soudage, en particulier soudage par ultrasons, soudage au laser, soudage par point ou soudage par bossage, et/ou par brasage.

22. Joint plat selon au moins une des revendications 1 à 21, **caractérisé en ce que** le joint est un joint de culasse pour assurer l'étanchéité de la culasse du bloc cylindres et possède des ouvertures traversantes supplémentaires au moins pour l'au moins une chambre de combustion.

23. Utilisation du joint selon au moins une des revendications 1 à 22 pour assurer l'étanchéité des passages de fluide dans des moteurs à combustion.

24. Utilisation selon la revendication 23 pour des moteurs à combustion dans des véhicules commerciaux.

25. Utilisation selon l'une des revendications 23 ou 24, pour assurer l'étanchéité d'une culasse d'un bloc cylindres.
